# EUROPÄISCHE PATENTSCHRIFT

(11) **EP 2 996 223 B1**
(45) Veröffentlichungstag und Bekanntmachung des Hinweises auf die Patenterteilung: **04.08.2021**
(21) Anmeldenummer: 15184051.9
(22) Anmeldetag: 07.09.2015
(51) Int. Cl.: H02K 1/02, H02K 1/27, H02K 1/24

(54) **Rotor für eine elektrische Maschine**
Rotor for an electric machine
Rotor de machine électrique

(30) Priorität: 10.09.2014 EP 14184233
(43) Veröffentlichungstag der Anmeldung: 16.03.2016
(73) Patentinhaber: Siemens Aktiengesellschaft, 80333 München (DE)
(72) Erfinder: Fischer, Ralf, 90419 Nürnberg (DE); Petermaier, Korbinian, 80799 München (DE); Vollmer, Rolf, 36129 Gersfeld (DE)

(56) Entgegenhaltungen:
- WO-A1-2013/147157
- DE-A1- 10 056 556
- DE-A1-102007 013 090
- JP-A- H1 155 911
- US-A- 5 801 478
- US-A1- 2011 089 782
- US-A1- 2011 241 466
- US-A1- 2013 119 816
- MARONGIU I ET AL: "Improved modelling of a distributed anisotropy synchronous reluctance machine", PROCEEDINGS OF THE INDUSTRY APPLICATIONS SOCIETY ANNUAL MEETING. DEARBORN, SEPT. 28 - OCT. 1, 1991; [PROCEEDINGS OF THE INDUSTRY APPLICATIONS SOCIETY ANNUAL MEETING], NEW YORK, IEEE, US, 28. September 1991 (1991-09-28), Seiten 238-243vol.1, XP032136356, DOI: 10.1109/IAS.1991.178161 ISBN: 978-0-7803-0453-6

## Beschreibung

Die Erfindung betrifft einen Rotor für eine elektrische Maschine, wobei der Rotor um eine Rotationsachse drehbar ist und wobei der Rotor an seiner radialen Außenfläche eine Mehrzahl von Permanentmagneten zur Ausbildung von zumindest einem Magnetpolpaar, vorzugsweise zwei oder mehr Magnetpolpaaren, aufweist. Weiterhin betrifft die Erfindung eine elektrische Maschine aufweisend einen derartigen Rotor.

Ein derartiger Rotor kommt beispielsweise bei permanenterregten Synchronmaschinen zum Einsatz.

Die Ankerrückwirkung bei elektrischen Maschinen, insbesondere bei permanenterregten Synchronmaschinen, beeinflusst ungünstig das Sättigungsverhalten, reduziert die maximale Leistung bei einer gegebenen Maximalspannung, führt zu einem erhöhten Strombedarf und reduziert die Regeldynamik. Sie führt zu einem erhöhten Bedarf an Magneten hoher Koerzitivfeldstärke.

Bisher wurden Maschinen mit vergleichsweise dicken Magneten und vergleichsweise großen Luftspalten gebaut, um die Ankerrückwirkung gering zu halten.

Aus der EP 2 704 294 A1 ist ein Rotor einer permanenterregten Synchronmaschine bekannt, wobei der Rotor ein Blechpaket aufweist und wobei an der im Wesentlichen zylindrischen Oberfläche des Rotors pro magnetischem Pol zumindest ein Permanentmagnet angeordnet ist.

Aus der WO 2013/147157 A1 ist eine elektrische Maschine mit einem Rotor bekannt, welcher ein kunststoffgebundenes, gepresstes Eisenpulver sowie an seiner radialen Außenseite Permanentmagnete aufweist, wobei das gepresste Eisenpulver eine magnetische Anisotropie aufweist.

Aus der US 2011/0089782 A1 ist ein Rotor einer elektrischen Maschine gemäß dem Oberbegriff des Anspruchs 1 bekannt.

Der Erfindung liegt die Aufgabe zugrunde, eine elektrischen Maschine aufweisend einen Rotor der eingangs genannten Art zu verbessern.

Diese Aufgabe wird durch einen Rotor gemäß Anspruch 1 gelöst.

Weiterhin wird diese Aufgabe durch eine elektrische Maschine aufweisend einen derartigen Rotor gelöst.

Bei dem vorgeschlagenen Rotor ist somit vorgesehen, unter den Permanentmagneten einen Sinter-Werkstoff mit einer weichmagnetischen Anisotropie anzuordnen. Für einen jeweiligen Magnetpol ist zumindest ein Permanentmagnet vorgesehen. Im Rahmen des vorliegenden Dokumentes werden Werkstoffe und Materialien dabei als weichmagnetisch verstanden, wenn sie eine Koerzitivfeldstärke von weniger als 100 kA/m aufweisen. Die weichmagnetische Anisotropie des Sinter-Werkstoffs macht sich dadurch bemerkbar, dass das Material entlang unterschiedlicher Richtungen unterschiedlich große magnetische Permeabilitäten aufweist. So weist das weichmagnetisch anisotropische Material entlang seiner so genannten leichten Richtung eine höhere magnetische Permeabilität auf als entlang seiner so genannten schweren Richtung. Dabei ist die leichte Richtung senkrecht zur schweren Richtung. Vorteilhafterweise weist der weichmagnetisch anisotropische Sinter-Werkstoff dabei eine geeignete hohe Sättigungsflussdichte auf.

Vorzugsweise ist die elektrische Maschine derart ausgelegt, dass sie mit elektrischen Leistungen bis in den Kilowatt-Bereich betrieben werden kann, wobei die elektrische Maschine insbesondere mit mehreren 10 kW elektrischer Leistung betreibbar ist.

Durch die Kombination der Mehrzahl von Permanentmagneten an der radialen Außenfläche des Rotors mit dem anisotrop weichmagnetischen Sinter-Werkstoff, welcher radial weiter innen als die Permanentmagnete angeordnet ist, ergeben sich eine Reihe von Vorteilen. Denn durch eine passende Anordnung der Permanentmagnete und des weichmagnetisch anisotropischen Sinter-Werkstoffs sowie seiner leichten Richtung und seiner schweren Richtung kann der Magnetfluss besonders vorteilhaft beeinflusst werden, so dass die Ankerrückwirkung im Vergleich zu herkömmlichen Maschinen reduziert wird.

Durch die vergleichsweise geringe Ankerrückwirkung ist beispielsweise der Scheinleistungsbedarf reduziert und der Leistungsfaktor cos(phi) größer im Vergleich zu herkömmlichen Maschinen. Somit erlaubt die geringere Ankerrückwirkung beispielsweise, einen kleineren Umrichter zur Speisung der elektrischen Maschine einzusetzen.

Von Vorteil ist weiterhin, dass die vergleichsweise geringe Ankerrückwirkung die Gegenfeldbelastung der Permanentmagnete reduziert. Dies ermöglicht den Einsatz von dünneren Permanentmagneten und Permanentmagneten mit geringerer Koerzitivfeldstärke. Insbesondere durch die vergleichsweise kleine, erforderliche Koerzitivfeldstärke können somit kostengünstigere Permanentmagnete mit einem reduzierten Gehalt an schweren Seltenen Erden (englisch "heavy rare earth", HRE) eingesetzt werden.

Im Unterschied zu bekannten, ähnlichen elektrischen Maschinen handelt es sich bei dem anisotrop weichmagnetischen Werkstoff um einen Sinter-Werkstoff, wodurch beispielsweise auch Ausgangsstoffe verwendet werden können, welche sich auf andere Weise nur sehr schwer oder gar nicht zu einem neuen Werkstoff verbinden lassen.

In Umfangsrichtung betrachtet erstreckt sich der anisotrop weichmagnetische Sinter-Werkstoff, welcher in radialer Richtung unterhalb des jeweiligen Permanentmagneten angeordnet ist, vorzugsweise zumindest entlang der halben Erstreckung des jeweiligen Permanentmagneten in Umfangsrichtung. Insbesondere erstreckt sich der anisotrop weichmagnetische Sinter-Werkstoff entlang der kompletten Erstreckung des jeweiligen Permanentmagneten in Umfangsrichtung und ggf. sogar darüber hinaus.

Der Vollständigkeit halber wird im Zusammenhang mit dem Einsatz von magnetisch anisotropen Materialien für elektrische Maschinen auf die Anwendung derartiger Materialien für Reluktanzmaschinen hingewiesen. So ist beispielsweise aus der GB 1 114 562 A eine dynamoelektrische Maschine in Form einer Reluktanzmaschine bekannt, welche einen Stator mit einer Statorwicklung und einen Rotor aufweist. Der Rotor umfasst magnetisches Material, welches Flusspfade für den durch die Statorwicklung erzeugten Fluss bereitstellt, wobei das magnetische Material derart angeordnet ist, das die Größe der entsprechenden Reluktanz abhängig von der Position des Rotors relativ zum Stator ist, wobei das magnetische Material als gestapeltes Blechpaket eines anisotropischen Materials vorliegt und sich die Bleche im Wesentlichen parallel zur Achse der Maschine erstrecken. Weiterhin ist aus der JP 4343281 B2 bzw. der JP H 11 055911 A ist ein Reluktanzmotor mit einem Rotor bekannt, wobei der Rotor eine gerade Anzahl von Magnetpolen und ein Material aufweist, welches Kristallkörner eines Stoffes aufweist, wobei die Kristallkörner aus Eisen oder einer Eisenlegierung sind und eine magnetische Anisotropie aufweisen.

Bei einer vorteilhaften Ausgestaltung der Erfindung sind der anisotrop weichmagnetische Sinter-Werkstoff und die Mehrzahl von Permanentmagneten derart angeordnet, dass ein jeweiliger d-Magnetfluss entlang einer jeweiligen d-Achse verstärkt wird und ein jeweiliger q-Magnetfluss entlang einer jeweiligen q-Achse geschwächt wird.

Die d- bzw. q-Achse werden auch als direkte Achse bzw. Querachse bezeichnet, wobei der während des Betriebs der elektrischen Maschine vorliegende bzw. zu erwartende Magnetfluss entlang der d- bzw. q-Achse in den d- bzw. q-Magnetfluss komponentenweise zerlegt werden kann. Bekanntermaßen korreliert der d-Magnetfluss mit dem Drehmoment.

Betrachtet man einen Querschnitt durch den Rotor senkrecht zur Rotationsachse, so ist bei dem vorgeschlagenen Rotor die jeweilige d-Achse in der Regel entlang einer jeweiligen Geraden angeordnet, auf welcher die Rotationsachse und der jeweilig Magnetpol liegen. Entsprechend ist die jeweilige q-Achse in der Regel entlang einer jeweiligen Geraden angeordnet, auf welcher die Rotationsachse und die Mitte zwischen zwei benachbarten Magnetpolen liegen.

Der vorgeschlagene Rotor ist dabei derart ausgebildet, dass der jeweilige d-Magnetfluss verstärkt wird und der jeweilige q-Magnetfluss geschwächt wird. Insbesondere wird somit der jeweilige d-Magnetfluss durch den zumindest einen Permanentmagneten des jeweiligen Magnetpols hindurch verstärkt. Dabei bezieht sich die Verstärkung bzw. Schwächung auf einen Rotor mit einem vergleichbaren weichmagnetischen Material, welches jedoch keine magnetische Anisotropie aufweist.

Die Schwächung des jeweiligen q-Magnetflusses bedeutet eine Erhöhung des magnetischen Widerstandes für den q-Magnetfluss. Dies hat den Vorteil, dass sich das Ankerquerfeld weniger stark ausbilden kann, wodurch insbesondere der Eisenkreis weniger gesättigt wird und die Drehmoment-Strom-Linearität verbessert wird. Ein besseres Regelverhalten und höhere, erreichbare Drehmomente sind die Folge. Weiterhin senkt der höhere magnetische Widerstand für den q-Magnetfluss die Querinduktivität Lq. Somit ist der Spannungsabfall an der Querreaktanz geringer, wodurch ein höherer Strom getrieben werden kann und somit höhere Drehmomente und Leistungen an der Spannungsgrenze möglich sind.

Erfindungsgemäß ist die leichte Richtung des anisotrop weichmagnetischen Sinter-Werkstoffs entlang einer jeweiligen d-Achse ausgerichtet.

Zwischen der leichten Richtung und der während des Betriebs der elektrischen Maschine vorliegenden bzw. zu erwartenden, jeweiligen d-Achse bzw. dem entsprechenden d-Magnetfluss liegt somit ein Winkel von 0°. Beispielsweise kann für den Rotor der zu erwartende bzw. vorliegende d-Magnetfluss, insbesondere durch Messung, Berechnung oder Simulation, ermittelt werden.

Durch die Ausrichtung der leichten Richtung des anisotrop weichmagnetischen Sinter-Werkstoffs entlang der jeweiligen d-Achse verringert sich der magnetische Widerstand für den d-Magnetfluss im Vergleich zu Materialien ohne magnetische Anisotropie. Der dadurch vergrößerte d-Magnetfluss geht einher mit einem größeren erreichbaren Drehmoment.

Zusätzlich kann vorgesehen sein, dass die schwere Richtung des anisotrop weichmagnetischen Sinter-Werkstoffs zumindest abschnittsweise im Wesentlichen senkrecht zur jeweiligen d-Achse ausgerichtet ist.

Bei einer weiteren vorteilhaften Ausgestaltung der Erfindung ist die leichte Richtung des anisotrop weichmagnetischen Sinter-Werkstoffs senkrecht zu einer jeweiligen q-Achse ausgerichtet.

Durch die Ausrichtung der leichten Richtung des anisotrop weichmagnetischen Sinter-Werkstoffs senkrecht zur jeweiligen q-Achse vergrößert sich der magnetische Widerstand für den q-Magnetfluss im Vergleich zu Materialien ohne magnetische Anisotropie. Der vergrößerte q-Magnetfluss geht einher mit einer geringeren Ankerrückwirkung.

Zusätzlich kann vorgesehen sein, dass die schwere Richtung des anisotrop weichmagnetischen Sinter-Werkstoffs entlang einer jeweiligen q-Achse ausgerichtet ist.

Dadurch, dass die leichte Richtung des anisotrop weichmagnetischen Sinter-Werkstoffs senkrecht zum jeweiligen q-Magnetfluss ist, vergrößert sich der magnetische Widerstand für den q-Magnetfluss im Vergleich zu Materialien ohne magnetische Anisotropie. Der dadurch verringerte q-Magnetfluss geht einher mit einer verringerten Ankerrückwirkung.

Zusätzlich kann vorgesehen sein, dass die schwere Richtung des anisotrop weichmagnetischen Sinter-Werkstoffs entlang einem jeweiligen q-Magnetfluss ausgerichtet ist.

Dadurch, dass die leichte Richtung des anisotrop weichmagnetischen Sinter-Werkstoffs parallel zum jeweiligen d-Magnetfluss ist, verringert sich der magnetische Widerstand für den d-Magnetfluss im Vergleich zu Materialien ohne magnetische Anisotropie. Der dadurch vergrößerte d-Magnetfluss geht einher mit einem größeren erreichbaren Drehmoment.

Bei einem nicht-erfindungsgemäßen Beispiel weist der Rotor ein im Wesentlichen zylinderförmig ausgestaltetes Innenteil auf, welches ein weichmagnetisches oder amagnetisches Material umfasst, wobei ausgehend von dem zumindest einen Permanentmagnet des jeweiligen Magnetpols entlang einer jeweiligen d-Achse zum Innenteil hin der anisotrop weichmagnetische Sinter-Werkstoff angeordnet ist, wobei die leichte Richtung des anisotrop weichmagnetischen Sinter-Werkstoffs im Wesentlichen entlang der jeweiligen d-Achse ausgerichtet ist.

Das Innenteil kann beispielsweise ein Blechpaket aus gängigem Elektroblech aufweisen, wobei die Bleche in axialer Richtung gestapelt sind. Das Innenteil weist eine mittige Durchgangsbohrung auf.

Für jeden der Magnetpole ist zumindest ein jeweiliger Permanentmagnet vorgesehen, wobei jeweilige d-Achse in der Regel entlang einer jeweiligen Geraden angeordnet, auf welcher die Rotationsachse und der jeweilig Magnetpol liegen. Ausgehend vom jeweiligen Permanentmagneten ist nach radial innen der anisotrop weichmagnetische Sinter-Werkstoff angeordnet, dessen leichte Richtung entlang der jeweiligen d-Achse ausgerichtet ist. Für jeden der Magnetpole kann dabei ein separater Bereich mit dem anisotrop weichmagnetischen Sinter-Werkstoff vorgesehen sein. Insgesamt ergibt sich somit eine in radialer Richtung weisende leichte Richtung des anisotrop weichmagnetischen Sinter-Werkstoffs für den jeweiligen Magnetpol. Insbesondere ist die leichte Richtung des jeweiligen Bereichs des einem jeweiligen Magnetpol zugeordneten anisotrop weichmagnetischen Sinter-Werkstoffs parallel zur radialen Richtung bezüglich der Mitte des jeweiligen Bereichs in Umfangsrichtung betrachtet.

Eine derartige Anordnung des anisotrop weichmagnetischen Sinter-Werkstoffs und des zumindest einen Permanentmagneten des jeweiligen Magnetpols bewirkt eine gute Führung des jeweiligen d-Magnetflusses entlang eines Weges mit vergleichsweise geringem magnetischem Widerstand innerhalb des Rotors. Somit werden vergleichsweise große erreichbare Drehmomente ermöglicht.

Bei einem nicht-erfindungsgemäßen Beispiel verbleibt in Umfangsrichtung zwischen den jeweiligen Magneten von zwei benachbarten Magnetpolen eine jeweilige Lücke, welche in radialer Richtung insbesondere bis zum im Wesentlichen zylinderförmigen Innenteil reicht. Somit wird jeweils ein Bereich mit dem anisotrop weichmagnetischen Sinter-Werkstoff für jeden der Magnetpole gebildet, wobei jeweils zwei benachbarte Bereiche durch die jeweilige Lücke voneinander abgetrennt sind. Somit ragen die Magnetpole in radialer Richtung aus dem Rotor heraus, wohingegen die Lücken jeweils eine Art Einbuchtung des Rotors darstellen.

Die erläuterten Lücken bewirken bei einem derart ausgestalteten Rotor einen nochmals verringerten, jeweiligen q-Magnetfluss. Zum einen wird dies von der verringerten magnetischen Permeabilität für den jeweiligen q-Magnetfluss innerhalb des Rotors und zum anderen durch einen im Vergleich zum jeweiligen Magnetpol vergrößerten Luftspalt verursacht.

Erfindungsgemäß weist der Rotor ein Innenteil auf, welches ein weichmagnetisches oder amagnetisches Material umfasst, wobei das Innenteil senkrecht zur Rotationsachse betrachtet bei einem n-poligen Rotor den Querschnitt eines (2*n)-eckigen Polygons aufweist und n größer oder gleich vier ist, wobei das (2*n)-eckige Polygon ein regelmäßiges, n-eckiges Polygon ist, dessen n Ecken jeweils durch Fasen ersetzt wurden, so dass das (2*n)-eckige Polygon n lange Seiten und n kurze Seiten aufweist, wobei ausgehend von dem zumindest einen Permanentmagneten des jeweiligen Magnetpols entlang einer jeweiligen d-Achse zu einer jeweiligen langen Seite des Innenteils hin der anisotrop weichmagnetische Sinter-Werkstoff angeordnet ist, wobei die leichte Richtung des anisotrop weichmagnetischen Sinter-Werkstoffs entlang der jeweiligen d-Achse ausgerichtet ist.

Für einen vierpoligen Rotor weist das Innenteil somit den Querschnitt eines Achtecks auf. Das Polygon ist ein regelmäßiges, n-eckiges Polygon, wobei die Ecken des Polygons durch Fasen ersetzt wurden. Somit weist das Polygon n lange Seiten und n kurze Seiten auf, wobei die kurzen Seiten vorzugsweise den n Fasen entsprechen.

Die Mehrzahl von Permanentmagneten des jeweiligen Magnetpols sowie der jeweils zugeordnete anisotrop weichmagnetische Sinter-Werkstoff sind dabei nach außen in Verlängerung der n langen Seiten angeordnet, wohingegen die erläuterten Lücken zwischen den Magnetpolen an den n kurzen Seiten zu finden sind. Prinzipiell kann auch vorgesehen sein, die Mehrzahl von Permanentmagneten sowie der jeweils zugeordnete anisotrop weichmagnetische Sinter-Werkstoff nach außen in Verlängerung der n kurzen Seiten anzuordnen.

Bei einem nicht-erfindungsgemäßen Beispiel weist der Rotor ein Innenteil auf, welches ein weichmagnetisches oder amagnetisches Material umfasst, wobei das Innenteil senkrecht zur Rotationsachse betrachtet bei einem n-poligen Rotor im Wesentlichen den Querschnitt eines regelmäßigen, n-eckigen Polygons aufweist und n größer oder gleich vier ist, wobei das Innenteil derart angeordnet ist, dass eine jeweilige erste Verbindungslinie von der Rotationsachse zu einem jeweiligen Eckpunkt des senkrecht zur Rotationsachse betrachteten Polygons des Innenteils im Wesentlichen entlang der jeweiligen d-Achse ausgerichtet ist, wobei der zumindest eine Permanentmagnet des jeweiligen Magnetpols senkrecht zur Rotationsachse betrachtet radial außen im Anschluss an den jeweiligen Eckpunkt angeordnet ist, wobei radial außen im Anschluss an eine jeweilige radiale Außenfläche des Innenteils der anisotrop weichmagnetische Sinter-Werkstoff angeordnet ist, wobei sich der anisotrop weichmagnetische Sinter-Werkstoff in radialer Richtung bis zu dem zumindest einen Permanentmagneten des jeweiligen Magnetpols erstreckt, wobei die leichte Richtung des anisotrop weichmagnetischen Sinter-Werkstoffs zwischen zwei benachbarten Eckpunkten jeweils im Wesentlichen entlang einer jeweiligen zweiten Verbindungslinie ausgerichtet ist, welche die beiden benachbarten Eckpunkte verbindet.

Das Innenteil kann dabei beispielsweise ein Blechpaket aus gängigem Elektroblech aufweisen, wobei die Bleche in axialer Richtung gestapelt sind. Das Innenteil kann auch eine mittige Durchgangsbohrung aufweisen. Für einen Rotor mit zwei Polpaaren, d.h. vier Magnetpolen, weist das Innenteil im Wesentlichen den Querschnitt eines Quadrats auf, wobei allgemein bei einem n-poligen Rotor im Wesentlichen der Querschnitt eines regelmäßigen n-Ecks für das Innenteil vorgesehen ist. Entsprechend weist das Innenteil für einen Rotor mit drei bzw. vier Polpaaren im Wesentlichen den Querschnitt eines regelmäßigen Hexagons bzw. Oktagons auf.

Für das nicht-erfindungsgemäße Beispiel eines quadratischen Querschnitts bei einem vierpoligen Rotor ist das Innenteil derart angeordnet, dass der jeweilige Eckpunkt des Quadrats von der Rotationsachse aus betrachtet entlang der jeweiligen d-Achse ausgerichtet ist. Da die jeweilige d-Achse in der Regel entlang einer jeweiligen Geraden angeordnet ist, auf welcher die Rotationsachse und der jeweilige Magnetpol liegen, ist auch der zumindest eine Permanentmagnet des jeweiligen Magnetpols radial außen im Anschluss an den jeweiligen Eckpunkt angeordnet. Entsprechendes gilt für Rotoren mit mehr als vier Polen.

Weiterhin ist bei dem nicht-erfindungsgemäßen Beispiel vorgesehen, dass außen im Anschluss an die jeweilige Außenfläche des Innenteils der anisotrop weichmagnetische Sinter-Werkstoff angeordnet ist, welches sich in radialer Richtung bis zu dem jeweiligen Permanentmagneten erstreckt. Für die jeweilige Außenfläche des Innenteils weist der Bereich mit dem anisotrop weichmagnetischen Sinter-Werkstoff im Querschnitt durch die Rotationsachse betrachtet somit im Wesentlichen den Querschnitt eines Kreissegmentes auf. Das jeweilige Kreissegment wird dabei nach radial innen durch die Außenfläche des Innenteils begrenzt, welches die jeweilige Kreissehne darstellt. Nach radial außen wird das jeweilige Kreissegment durch den jeweiligen Permanentmagneten und/oder die Oberfläche des Rotors abgeschlossen. Für jedes der Kreissegmente ist dabei vorgesehen, dass die leichte Richtung des darin befindlichen anisotrop weichmagnetischen Sinter-Werkstoffs im Wesentlichen entlang der jeweiligen Kreissehne ausgerichtet ist, so dass die jeweilige leichte Richtung im Wesentlichen senkrecht auf einer jeweiligen Winkelhalbierenden zwischen zwei benachbarten Magnetpolen steht.

Durch eine derartige Anordnung wird sichergestellt, dass der jeweilige d-Magnetfluss, welcher bei dem zumindest einen Permanentmagneten des jeweiligen Magnetpols in den Rotor ein- bzw. austritt, verlustarm durch den Rotor geleitet werden kann. Dies wird dadurch erreicht, dass der anisotrop weichmagnetische Sinter-Werkstoff einen jeweiligen Verbindungsweg vom jeweiligen Magnetpol zu einem benachbarten Magnetpol bereitstellt, wobei der Rotor entlang des jeweiligen Verbindungsweges dank des anisotrop weichmagnetischen Sinter-Werkstoffs und der Ausrichtung seiner leichten Richtung eine hohe magnetische Permeabilität aufweist. Gleichzeitig wird durch eine derartige Anordnung das Eindringen des jeweiligen q-Magnetflusses in den Rotor erschwert, da die leichte bzw. schwere Richtung des anisotrop weichmagnetischen Sinter-Werkstoffs im Wesentlichen senkrecht bzw. parallel zum jeweiligen, zu erwartenden q-Magnetfluss ausgerichtet ist.

Bei einem weiteren nicht-erfindungsgemäßen Beispiel ist ein jeweiliger Polbereich aufweisend der anisotrop weichmagnetische Sinter-Werkstoff vorgesehen, wobei der jeweilige Polbereich in radialer Richtung von dem zumindest einen Permanentmagneten des jeweiligen Magnetpols nach radial innen angeordnet ist, wobei die leichte Richtung des anisotrop weichmagnetischen Sinter-Werkstoffs des jeweiligen Polbereichs im Wesentlichen entlang der jeweiligen d-Achse ausgerichtet ist, wobei zwischen zwei in Umfangsrichtung aufeinanderfolgend angeordneten Polbereichen jeweils ein Zwischenbereich aufweisend der anisotrop weichmagnetische Sinter-Werkstoff angeordnet ist, wobei die leichte Richtung des anisotrop weichmagnetischen Sinter-Werkstoffs des jeweiligen Zwischenbereichs im Wesentlichen senkrecht zur jeweiligen q-Achse ausgerichtet ist.

Für jeden der Magnetpole ist dabei zumindest ein jeweiliger Permanentmagnet vorgesehen, wobei jeweilige d-Achse in der Regel entlang einer jeweiligen Geraden angeordnet, auf welcher die Rotationsachse und der jeweilige Magnetpol liegen.

Ausgehend vom jeweiligen Permanentmagneten ist nach radial innen ein jeweiliger Polbereich mit dem anisotrop weichmagnetischen Sinter-Werkstoff vorgesehen, dessen leichte Richtung im Wesentlichen entlang der jeweiligen d-Achse ausgerichtet ist. Dabei soll die leichte Richtung als im Wesentlichen entlang der jeweiligen d-Achse ausgerichtet gelten, wenn zwischen der leichten Richtung und der jeweiligen d-Achse ein Winkel von 0° bzw. von 0° bis 15°, insbesondere von 0° bis 40°, liegt. Insgesamt ergibt sich somit eine im Wesentlichen in radialer Richtung weisende leichte Richtung des anisotrop weichmagnetischen Sinter-Werkstoffs für den jeweiligen Polbereich. Insbesondere ist die leichte Richtung des anisotrop weichmagnetischen Sinter-Werkstoffs des jeweiligen Polbereichs parallel zur radialen Richtung bezüglich der in Umfangsrichtung betrachteten Mitte des jeweiligen Polbereichs.

Dabei ist zwischen zwei benachbarten Polbereichen jeweils ein Zwischenbereich angeordnet, welcher den anisotrop weichmagnetischen Sinter-Werkstoff aufweist. Dabei ist die leichte Richtung des anisotrop weichmagnetischen Sinter-Werkstoffs des jeweiligen Zwischenbereichs im Wesentlichen senkrecht zur jeweiligen q-Achse ausgerichtet, so dass zwischen der jeweiligen q-Achse und der jeweiligen leichten Richtung ein Winkel von 90° bzw. von 75° bis 90°, insbesondere von 50° bis 90°, liegt.

Dabei kann vorgesehen sein, dass die schwere Richtung des anisotrop weichmagnetischen Sinter-Werkstoffs des jeweiligen Zwischenbereichs im Wesentlichen entlang der jeweiligen q-Achse ausgerichtet ist, so dass zwischen der jeweiligen q-Achse und der jeweiligen schweren Richtung ein Winkel von 0° bzw. von 0° bis 15°, insbesondere von 0° bis 40°, liegt.

Derart ausgerichtete, jeweilige leichte bzw. schwere Richtungen der Polbereichen und der Zwischenbereiche bieten einem jeweiligen d-Magnetfluss einen Weg durch den Rotor mit vergleichsweise hoher magnetischer Permeabilität, wohingegen einem jeweiligen q-Magnetfluss ein Weg durch den Rotor mit vergleichsweise geringer magnetischer Permeabilität angeboten wird. Dies führt dazu, dass der jeweilige d-Magnetfluss verstärkt und der jeweilige q-Magnetfluss geschwächt wird.

Dabei erstreckt sich der jeweilige Zwischenbereich in radialer Richtung weniger weit nach außen als der jeweilige Polbereich und insbesondere als die jeweiligen Permanentmagnete. Somit verbleibt in Umfangsrichtung zwischen den jeweiligen Polbereichen eine jeweilige Nut. Somit ragen die Magnetpole in radialer Richtung aus dem Rotor heraus, wohingegen die Nuten jeweils eine Art Einbuchtung des Rotors darstellen.

Die erläuterten Nuten bewirken bei einem derart ausgestalteten Rotor einen nochmals verringerten, jeweiligen q-Magnetfluss. Zum einen wird dies von der verringerten magnetischen Permeabilität für den jeweiligen q-Magnetfluss innerhalb des Rotors und zum anderen durch einen im Vergleich zum jeweiligen Magnetpol vergrößerten Luftspalt verursacht.

Bei einer weiteren vorteilhaften Ausgestaltung der Erfindung weist der anisotrop weichmagnetische Sinter-Werkstoff eine Sättigungsflussdichte von mindestens 1 T auf, wobei der anisotrop weichmagnetische Sinter-Werkstoff alternativ oder zusätzlich eine Koerzitivfeldstärke von höchstens 10 kA/m, insbesondere von höchstens 1 kA/m, aufweist.

Derartige Eigenschaften des anisotrop weichmagnetischen Sinter-Werkstoffs ermöglichen insbesondere den Einsatz von vergleichsweise kostengünstigen Permanentmagneten mit einem reduzierten Gehalt an schweren Seltenen Erden, wobei dennoch die Erzeugung eines ausreichend großen Drehmomentes ermöglicht wird.

Bei einer weiteren vorteilhaften Ausgestaltung der Erfindung ist die magnetische Permeabilität µr_{L} des anisotrop weichmagnetischen Sinter-Werkstoffs entlang der leichten Richtung um zumindest eine Größenordnung, vorzugsweise um zumindest zwei Größenordnungen, größer als die magnetische Permeabilität µrₛ des anisotrop weichmagnetischen Sinter-Werkstoffs entlang der schweren Richtung, wobei insbesondere µr_{L} größer als 20 und µr_{S} kleiner als 1,6 ist.

Ein derartiger anisotrop weichmagnetischer Sinter-Werkstoff erlaubt eine besonders vorteilhafte Ausgestaltung des Rotors, da die Stärkung des jeweiligen d-Magnetflusses und die Schwächung des jeweiligen q-Magnetflusses besonders ausgeprägt sind.

Bei einer weiteren vorteilhaften Ausgestaltung der Erfindung umfasst der anisotrop weichmagnetische Sinter-Werkstoff Neodym-Eisen-Bor, insbesondere weichmagnetisches Neodym-Eisen-Bor.

Vorzugsweise weist der Rotor eine Hohlwelle auf.

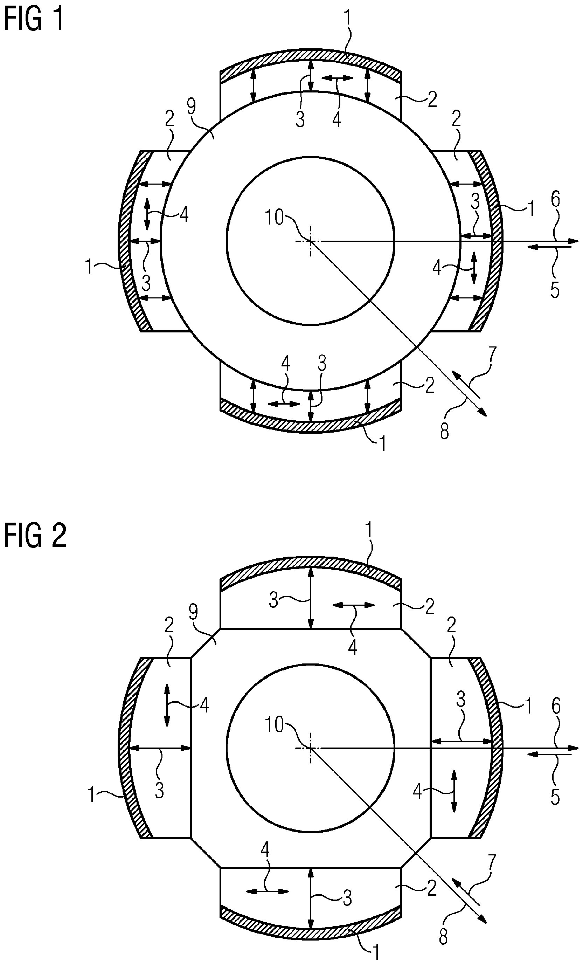

Im Folgenden wird die Erfindung anhand des in der Figur 2 dargestellten Ausführungsbeispiels näher beschrieben und erläutert. Es zeigen:
- FIG 1 & 3-5: einen Querschnitt eines ersten bis vierten nicht-erfindungsgemäßen Beispiels eines Rotors.
- FIG 2: einen Querschnitt des Ausführungsbeispiels des Rotors.

Figur 1 zeigt einen Querschnitt eines ersten nicht-erfindungsgemäßen Beispiels eines Rotors. Der Rotor ist um eine Rotationsachse 10 drehbar und weist an seiner radialen Außenfläche eine Mehrzahl von Permanentmagneten 1 zur Ausbildung von zwei Magnetpolpaaren auf. Radial weiter innen als die Mehrzahl von Permanentmagneten 1 weist der Rotor einen anisotrop weichmagnetischen Sinter-Werkstoff 2 mit einer leichten Richtung 3 und einer schweren Richtung 4 auf. Im Rahmen des ersten nicht-erfindungsgemäßen Beispiels ist je Magnetpol ein separater Bereich mit dem anisotrop weichmagnetischen Sinter-Werkstoff 2 vorgesehen.

Wie in Figur 1 angedeutet, weist der Rotor für den jeweiligen Magnetpol eine d-Achse 6 und eine q-Achse 8 auf, welche auch direkte Achse bzw. Querachse genannt werden. Ein während des Betriebs der entsprechenden elektrischen Maschine vorliegender Magnetfluss kann entlang der der jeweiligen d- bzw. q-Achse in einen d- bzw. q-Magnetfluss komponentenweise zerlegt werden.

Als anisotrop weichmagnetische Sinter-Werkstoffe 2 können dabei Werkstoffe und Materialien eingesetzt werden, die zum einen eine Koerzitivfeldstärke von weniger als 100 kA/m aufweisen und zum anderen entlang ihrer leichten Richtung 3 eine höhere magnetische Permeabilität als entlang ihrer schweren Richtung 4 aufweisen. Vorzugsweise ist die schwere Richtung 4 dabei im Wesentlichen senkrecht zur leichten Richtung 3.

Der Rotor weist dabei weiterhin ein im Wesentlichen zylinderförmig ausgestaltetes Innenteil 9 auf, welches ein weichmagnetisches oder amagnetisches Material umfasst. Beispielsweise kann das Innenteil 9 hohlzylinderförmig ausgestaltet sein, damit eine Hohlwelle aufgenommen werden kann. Der anisotrop weichmagnetische Sinter-Werkstoff 2 ist ausgehend von dem oder den jeweiligen Permanentmagneten des jeweiligen Magnetpols entlang der jeweiligen d-Achse zum Innenteil 9 hin angeordnet, wobei die leichte Richtung 3 des anisotrop weichmagnetischen Sinter-Werkstoffs 2 im Wesentlichen entlang der jeweiligen d-Achse ausgerichtet ist.

Insbesondere sind der anisotrop weichmagnetische Sinter-Werkstoff 2 und die Mehrzahl von Permanentmagneten 1 derart angeordnet, dass der jeweilige d-Magnetfluss 5 entlang der jeweiligen d-Achse 6 verstärkt wird und der jeweilige q-Magnetfluss 7 entlang der jeweiligen q-Achse 8 geschwächt wird.

Es verbleibt eine jeweilige Lücke zwischen den jeweiligen Permanentmagneten von zwei benachbarten Magnetpolen, wobei die jeweilige Lücke in radialer Richtung zum zylinderförmigen Innenteil 9 reicht. Entsprechend ragen die Magnetpole in radialer Richtung aus dem Rotor heraus, wohingegen die Lücken jeweils eine Art Einbuchtung des Rotors darstellen.

Figur 2 zeigt einen Querschnitt des Ausführungsbeispiels des erfindungsgemäßen Rotors. Da das Ausführungsbeispiel einige Ähnlichkeiten mit dem ersten nicht-erfindungsgemäßen Beispiel aufweist, werden lediglich einige Unterschiede erläutert. Gleiche Bezugszeichen wie in Figur 1 bezeichnen dabei gleiche Gegenstände.

Im Unterschied zum ersten nicht-erfindungsgemäßen Beispiel weist das Innenteil 9 des Ausführungsbeispiels den Querschnitt eines Oktagons auf. Das Oktagon ist quadratisch, wobei die Ecken des Quadrats durch Fasen ersetzt wurden. Somit weist das Oktagon vier lange Seiten und vier kurze Seiten auf, wobei die kurzen Seiten den vier Fasen entsprechen.

Die Mehrzahl von Permanentmagneten 1 des jeweiligen Magnetpols sowie der jeweils zugeordnete anisotrop weichmagnetische Sinter-Werkstoff 2 sind dabei nach außen in Verlängerung der vier langen Seiten angeordnet, wohingegen die erläuterten Lücken zwischen den Magnetpolen an den vier kurzen Seiten zu finden sind.

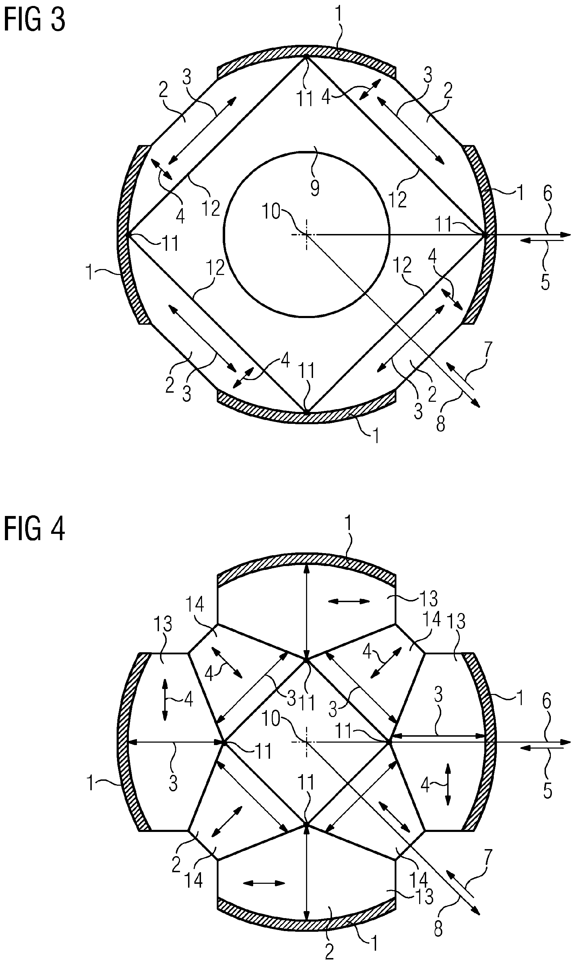

Figur 3 zeigt einen Querschnitt eines zweiten nicht-erfindungsgemäßen Beispiels eines Rotors. Der Rotor ist um eine Rotationsachse 10 drehbar und weist an seiner radialen Außenfläche eine Mehrzahl von Permanentmagneten 1 zur Ausbildung von zwei Magnetpolpaaren auf. Radial weiter innen als die Mehrzahl von Permanentmagneten 1 weist der Rotor einen anisotrop weichmagnetischen Sinter-Werkstoff 2 mit einer leichten Richtung 3 und einer schweren Richtung 4 auf.

Weiterhin weist der Rotor ein Innenteil 9 auf, welches ein weichmagnetisches oder amagnetisches Material umfasst. Beispielsweise kann das Innenteil 9 eine entlang der Rotationsachse 10 verlaufende Bohrung zur Aufnahme einer Hohlwelle aufweisen. In Richtung der Rotationsachse 10 betrachtet weist das Innenteil 9 für den vorliegenden vierpoligen Rotor im Wesentlichen den Querschnitt eines Quadrats, also eines regelmäßigen viereckigen Polygons, auf.

Das Innenteil 9 ist derart angeordnet, dass eine jeweilige erste Verbindungslinie von der Rotationsachse 10 zu einem jeweiligen Eckpunkt 11 des Quadrats des Innenteils 9 im Wesentlichen entlang der jeweiligen d-Achse 6 ausgerichtet ist, wobei der zumindest eine Permanentmagnet 1 des jeweiligen Magnetpols senkrecht zur Rotationsachse 10 betrachtet radial außen im Anschluss an den jeweiligen Eckpunkt 11 angeordnet ist.

Radial außen im Anschluss an eine jeweilige radiale Außenfläche 12 des Innenteils 9 ist der anisotrop weichmagnetische Sinter-Werkstoff 2 angeordnet, wobei sich der anisotrop weichmagnetische Sinter-Werkstoff 2 in radialer Richtung zu dem zumindest einen Permanentmagneten 1 des jeweiligen Magnetpols erstreckt. Die leichte Richtung 3 des anisotrop weichmagnetischen Sinter-Werkstoffs 2 ist zwischen zwei benachbarten Eckpunkten 11 jeweils im Wesentlichen entlang einer jeweiligen zweiten Verbindungslinie ausgerichtet, welche die beiden benachbarten Eckpunkte 11 verbindet.

Vorzugsweise ist die leichte Richtung 3 des anisotrop weichmagnetischen Sinter-Werkstoffs 2 somit zwischen zwei benachbarten Magnetpolen im Wesentlichen senkrecht zur jeweiligen q-Achse ausgerichtet, wohingegen die schwere Richtung 4 im Wesentlichen parallel zur jeweiligen q-Achse ausgerichtet ist.

Figur 4 zeigt einen Querschnitt eines dritten nicht-erfindungsgemäßen Beispiels eines Rotors. Der Rotor ist um eine Rotationsachse 10 drehbar und weist an seiner radialen Außenfläche eine Mehrzahl von Permanentmagneten 1 zur Ausbildung von zwei Magnetpolpaaren auf. Radial weiter innen als die Mehrzahl von Permanentmagneten 1 weist der Rotor einen anisotrop weichmagnetischen Sinter-Werkstoff 2 mit einer leichten Richtung 3 und einer schweren Richtung 4 auf.

Der Rotor weist einen jeweiligen Polbereich 13 aufweisend den anisotrop weichmagnetischen Sinter-Werkstoff 2 auf, wobei der jeweilige Polbereich 13 in radialer Richtung von dem zumindest einen Permanentmagneten 1 des jeweiligen Magnetpols nach radial innen angeordnet ist. Die leichte Richtung 3 des anisotrop weichmagnetischen Sinter-Werkstoffs 2 des jeweiligen Polbereichs 13 ist im Wesentlichen entlang der jeweiligen d-Achse 6 ausgerichtet.

Zwischen zwei in Umfangsrichtung aufeinander folgend angeordneten Polbereichen 13 ist jeweils ein Zwischenbereich 14 angeordnet, welcher den anisotrop weichmagnetischen Sinter-Werkstoff 2 aufweist. Die leichte Richtung 3 des anisotrop weichmagnetischen Sinter-Werkstoffs 2 des jeweiligen Zwischenbereichs 14 ist im Wesentlichen senkrecht zur jeweiligen q-Achse 8 ausgerichtet.

Vorzugsweise erstreckt sich der jeweilige Polbereich 13 mit den jeweiligen Permanentmagneten 1 in radialer Richtung weiter nach außen als der jeweilige Zwischenbereich 14, wie in Figur 4 angedeutet. Somit verbleibt in Umfangsrichtung zwischen den jeweiligen Polbereichen eine jeweilige Nut.

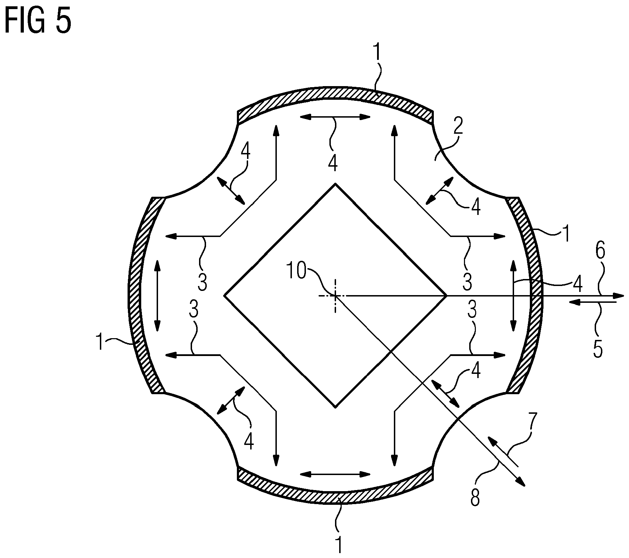

Figur 5 zeigt einen Querschnitt eines vierten nicht-erfindungsgemäßen Beispiels eines Rotors. Das vierte Beispiel weist einige Ähnlichkeiten mit dem dritten Beispiel auf. Beim Rotor gemäß dem vierten Beispiels sind die jeweiligen Polbereiche 13 und Zwischenbereiche 14 nicht strikt voneinander getrennt, sondern gehen vielmehr ineinander über. Entsprechend ist der anisotrop weichmagnetische Sinter-Werkstoff 2 derart ausgestaltet, dass auch die leichte Richtung 3 zwischen zwei benachbarten Magnetpolen einen im Wesentlichen kontinuierlichen Verlauf aufweist. Beispielsweise verläuft die jeweilige leichte Richtung 3 im Bereich der jeweiligen q-Achse 8 im Wesentlichen senkrecht zur jeweiligen q-Achse 8 und geht zur jeweiligen d-Achse 6 über in eine Ausrichtung im Wesentlichen entlang der jeweiligen d-Achse 6.

## Patentansprüche

1. Rotor für eine elektrische Maschine,
wobei der Rotor um eine Rotationsachse (10) drehbar ist und wobei der Rotor an seiner radialen Außenfläche eine Mehrzahl von Permanentmagneten (1) zur Ausbildung von zumindest einem Magnetpolpaar, vorzugsweise zwei oder mehr Magnetpolpaaren, aufweist,
wobei der Rotor ein Innenteil (9) aufweist, welches ein weichmagnetisches oder amagnetisches Material umfasst,
wobei das Innenteil (9) eine entlang der Rotationsachse (10) verlaufende Bohrung zur Aufnahme einer Welle aufweist, **dadurch gekennzeichnet, dass**
der Rotor radial weiter innen als die Mehrzahl von Permanentmagneten (1) zumindest abschnittweise einen anisotrop weichmagnetischen Sinter-Werkstoff (2) mit einer leichten Richtung (3) und einer schweren Richtung (4) aufweist,
wobei das Innenteil (9) in Richtung der Rotationsachse (10) betrachtet bei einem n-poligen Rotor den Querschnitt eines (2*n)-eckigen Polygons aufweist und n größer oder gleich vier ist,
wobei das (2*n)-eckige Polygon ein regelmäßiges, n-eckiges Polygon ist, dessen n Ecken jeweils durch Fasen ersetzt sind, so dass das (2*n)-eckige Polygon n lange Seiten und n kurze Seiten aufweist,
wobei ausgehend von dem zumindest einen Permanentmagneten (1) des jeweiligen Magnetpols entlang der jeweiligen d-Achse (6) zu einer jeweiligen langen Seite des Innenteils (9) hin den anisotrop weichmagnetischen Sinter-Werkstoff (2) angeordnet ist,
wobei die leichte Richtung (3) des anisotrop weichmagnetischen Sinter-Werkstoffs (2) entlang der jeweiligen d-Achse (6) ausgerichtet ist.

2. Rotor nach Anspruch 1,
wobei der anisotrop weichmagnetische Sinter-Werkstoff (2) und die Mehrzahl von Permanentmagneten (1) derart angeordnet sind, dass
- ein jeweiliger d-Magnetfluss (5) entlang der jeweiligen d-Achse (6) verstärkt wird und
- ein jeweiliger q-Magnetfluss (7) entlang der jeweiligen q-Achse (8) geschwächt wird.

3. Rotor nach einem der vorhergehenden Ansprüche,
wobei der anisotrop weichmagnetische Sinter-Werkstoff (2) eine Sättigungsflussdichte von mindestens 1 T aufweist und/oder wobei der anisotrop weichmagnetische Sinter-Werkstoff (2) eine Koerzitivfeldstärke von höchstens 10 kA/m, insbesondere von höchstens 1 kA/m, aufweist.

4. Rotor nach einem der vorhergehenden Ansprüche,
wobei die magnetische Permeabilität µr_{L} des anisotrop weichmagnetischen Sinter-Werkstoff (2) entlang der leichten Richtung (3) um zumindest eine Größenordnung, vorzugsweise um zumindest zwei Größenordnungen, größer ist als die magnetische Permeabilität µr_{S} des anisotrop weichmagnetischen Sinter-Werkstoffs (2) entlang der schweren Richtung (4),
wobei insbesondere µr_{L} größer als 20 und µrₛ kleiner als 1,6 ist.

5. Rotor nach einem der vorhergehenden Ansprüche,
wobei der anisotrop weichmagnetische Sinter-Werkstoff (2) Neodym-Eisen-Bor, insbesondere weichmagnetisches Neodym-Eisen-Bor, umfasst.

6. Elektrische Maschine aufweisend einen Rotor gemäß einem der vorhergehenden Ansprüche.

## Claims

1. Rotor for an electric machine,
wherein the rotor is rotatable about an axis of rotation (10) and wherein the rotor has on its radial outer surface a plurality of permanent magnets (1) for forming at least one magnetic pole pair, preferably two or more magnetic pole pairs,
wherein the rotor has an inner part (9) which comprises a soft magnetic or an amagnetic material,wherein the inner part (9) has a bore running along the axis of rotation (10) for receiving a shaft,
**characterised in that**
the rotor has, at least in sections, radially further inward than the plurality of permanent magnets (1), an anisotropically soft magnetic sintered material (2) having an easy direction (3) and a hard direction (4),
wherein the inner part (9), viewed in the axis of rotation (10), in an n-pole rotor has the cross section of a (2*n)-cornered polygon, and n is greater than or equal to four, wherein the (2*n)-cornered polygon is a regular n-cornered polygon whose n corners are each replaced by bevels such that the (2*n)-cornered polygon has n long sides and n short sides, wherein the anisotropically soft magnetic sintered material (2) is arranged, starting from the at least one permanent magnet (1) of the respective magnetic pole, along the respective d-axis (6) towards a respective long side of the inner part (9),
wherein the easy direction (3) of the anisotropically soft magnetic sintered material (2) is oriented along the respective d-axis (6).

2. Rotor according to claim 1,
wherein the anisotropically soft magnetic sintered material (2) and the plurality of permanent magnets (1) are arranged such that
- a respective d-magnetic flux (5) along the respective d-axis (6) is strengthened and
- a respective q-magnetic flux (7) along the respective q-axis (8) is weakened.

3. Rotor according to one of the preceding claims,
wherein the anisotropically soft magnetic sintered material (2) has a saturation flux density of at least 1 T and/or wherein the anisotropically soft magnetic sintered material (2) has a coercive field strength of maximally 10 kA/m, in particular of maximally 1 kA/m.

4. Rotor according to one of the preceding claims,
wherein the magnetic permeability µr_{L} of the anisotropically soft magnetic sintered material (2) along the easy direction (3) is greater by at least one order of magnitude, preferably by at least two orders of magnitude, than the magnetic permeability µr_{S} of the anisotropically soft magnetic sintered material (2) along the hard direction (4),
wherein in particular µr_{L} is greater than 20 and µr_{S} is less than 1.6.

5. Rotor according to one of the preceding claims,
wherein the anisotropically soft magnetic sintered material (2) comprises neodymium-iron-boron, in particular soft magnetic neodymium-iron-boron.

6. Electric machine having a rotor according to one of the preceding claims.

## Revendications

1. Rotor d'une machine électrique,
dans lequel le rotor peut tourner autour d'un axe (10) de rotation et dans lequel le rotor a sur sa surface extérieure radiale une pluralité d'aimants (1) permanents pour la constitution d'au moins une paire de pôles magnétiques, de préférence de deux paires de pôles magnétiques ou plus,
dans lequel le rotor a une partie (9) intérieure, qui comprend un matériau à magnétisme doux ou amagnétique,
dans lequel la partie (9) intérieure a un alésage, s'étendant suivant l'axe (10) de rotation, de réception d'un arbre, **caractérisé en ce que**
le rotor a vers l'intérieur plus loin radialement que la pluralité d'aimants (1) permanents au moins par endroit un matériau (2) de frittage à magnétisme doux de manière anisotrope ayant une direction (3) légère et une direction (4) lourde,
dans lequel la partie (9) intérieure, considérée dans la direction de l'axe (10) de rotation, a, pour un rotor à n pôles,
la section transversale d'un polygone à (2*n) sommets, n étant supérieur ou égal à 4,
dans lequel le polygone à (2*n) sommets est un polygone régulier à n sommets, dont les n sommets sont remplacés respectivement par des biseaux de manière à ce que le polygone à (2*n) sommets ait n grands côtés et n petits côtés,
dans lequel le matériau (2) de frittage à magnétisme doux de manière anisotrope est disposé à partir du au moins un aimant (1) permanent du pôle magnétique respectif le long de l'axe (6) d respectif en direction d'un grand côté respectif de la partie (9) intérieure, dans lequel la direction (3) légère du matériau (2) de frittage à magnétisme doux de manière anisotrope est dirigée le long de l'axe (6) d respectif.

2. Rotor suivant la revendication 1,
dans lequel le matériau (2) de frittage à magnétisme doux de manière anisotrope et la pluralité d'aimants (1) permanents sont disposés de manière
- à renforcer un flux (5) magnétique d respectif suivant l'axe (6) d respectif et
- à affaiblir un flux (7) magnétique q respectif le long de l'axe (8) q respectif.

3. Rotor suivant l'une des revendications précédentes,
dans lequel le matériau (2) de frittage à magnétisme doux de manière anisotrope a une densité de flux de saturation d'au moins 1 T et/ou dans lequel le matériau (2) de frittage à magnétisme doux de manière anisotrope a une intensité de champ coercitif de 10 kA/m au plus, notamment de 1 kA/m au plus.

4. Rotor suivant l'une des revendications précédentes,
dans lequel la perméabilité µr_{L} magnétique du matériau (2) de frittage à magnétisme doux de manière anisotrope le long de la direction (3) légère est plus grande d'au moins un ordre de grandeur, de préférence d'au moins deux ordres de grandeur, que la perméabilité µr_{S} magnétique du matériau (2) de frittage à magnétisme doux de manière anisotrope le long de la direction (4) lourde, dans lequel notamment µr_{L} est plus grand que 20 et µr_{S} est plus petit que 1,6.

5. Rotor suivant l'une des revendications précédentes,
dans lequel le matériau (2) de frittage à magnétisme doux de manière anisotrope comprend du néodyme-fer-bore, notamment du néodyme-fer-bore à magnétisme doux.

6. Machine électrique ayant un rotor suivant l'une des revendications précédentes.
